Europäisches Patentamt

European Patent Office

Office européen des brevets

(11) Veröffentlichungsnummer: **0 221 286**

**A1**

(12) **EUROPÄISCHE PATENTANMELDUNG**

(21) Anmeldenummer: 86112346.1

(22) Anmeldetag: 06.09.86

(51) Int. Cl.⁴: **G06F 15/16**

(30) Priorität: 01.10.85 CH 4227/85

(43) Veröffentlichungstag der Anmeldung:
13.05.87 Patentblatt 87/20

(84) Benannte Vertragsstaaten:
CH DE GB LI SE

(71) Anmelder: **BBC Aktiengesellschaft Brown, Boveri & Cie.**
**Haselstrasse**
**CH-5401 Baden(CH)**

(72) Erfinder: **Aschmann, Hans-Rudolf**
**Klosterstrasse 9**
**CH-5430 Wettingen(CH)**

(54) **Verfahren zur Implementierung von Fehlertoleranz in verteilten Rechnersystemen mit mehreren Knoten.**

(57) Bei diesem Verfahren werden Remote-Procedure-Calls verwendet, welche von einem Kundenprozess erzeugt und von einem primären oder ersatzweise von einem sekundären Bedienerprozess ausgeführt werden. Die Remote-Procedure-Calls werden vom sie erzeugenden Kundenprozess mit zwei Identifikationen versehen, sofern der jeweilige Kundenprozess selbst Bedienerprozess im Rahmen eines vorangegangenen, übergeordneten Remote-Procedure-Calls ist.

EP 0 221 286 A1

## Vefahren zur Implementierung von Fehlertoleranz in verteilten Rechnersystemen mit mehreren Knoten

Die Erfindung betrifft ein Verfahren zur Implementierung von Fehlertoleranz in verteilten Rechnersystemen mit mehreren Knoten.

Solche Verfahren sind bekannt. Bei den bekannten Verfahren können jeweils Prozesse in verschiedenen Knoten ausgeführt werden, wobei die Ausführung jedoch normalerweise nur in einem Knoten, dem Hauptknoten erfolgt. Lediglich wenn die Prozessauführung im Hauptknoten fehlerhaft oder unterbrochen ist, wird sie ersatzweise in einem der anderen Knoten ausgeführt. Um die Voraussetzungen dafür zu schaffen, dass die Prozessausführung in den anderen Knoten nicht von Anfang an wiederholt, sondern bereits in einem fortgeschrittenen Ausführungsstadium übernommen und fortgeführt werden kann, ist es erforderlich, den vom Prozess im Hauptknoten erreichten Zustand in mehr oder weniger regelmässigen Abständen in die anderen Knoten zu kopieren. Dieses Verfahren, das in der Fachsprache mit "Checkpointing" bezeichnet wird, ist relativ aufwendig.

Die Erfindung, wie sie in den Ansprüchen gekennzeichnet ist, löst die Aufgabe, ein Verfahren der eingangs genannten Art anzugeben, bei welchem die Ausführung eines Prozesses durch einen anderen Prozess in einem anderen Knoten in einem bereits fortgeschrittenen Ausführungsstadium übernommen werden kann, ohne dass jedoch regelmässig Zustandskopien erzeugt werden müssen.

Durch die Erfindung wird zur Lösung der genannten Aufgabe der Mechanismus der Remote-Procedure-Calls verwendet, der ein an sich bekannter Mechanismus für die Interprozesskommunikation in verteilten Rechnersystemen ist. Er besteht aus dem Austausch von Meldungen bzw. Nachrichten zwischen Kunden-und Bedienerprozessen. Realisierungen von Remote-Procedure-Calls sind bereits bekannt aus A. Birell, B. Nelson, "Implementing Remote Procedure Calls", ACM Transactions on Computer Systems 2, 1 (February 1984), 39-59 oder auch aus Eric C. Cooper, "Circus: A Replicated Procedure Call Facility", Proceedings 4th Symposium on Reliability in Distributed Software and Database Systems, 1984, Editors: V. Gligor, P.Ng. Die dabei verwendeten Remote-Procedure-Calls sind jedoch durchwegs dadurch gekennzeichnet, dass nur eine einzige Identifikation vorhanden ist um Verwechslungen zu vermeiden. Daneben enthalten sie noch Felder für Kontrollinformationen, sowie Nutzdaten für die Kommunikation. Nach der Erfindung sind jedoch zwei Identifikationen vorgesehen, sofern der Kundenprozess selbst Bedienerprozess für einen weiteren Kundenprozess im Rahmen eines vorangegangenen, übergeordneten Remote-Procedure-Calls ist. Die zweite, zusätzlich vorgesehene Identifikation ist vorzugsweise die "Eltern-Identifikation" des Remote-Procedure-Calls.

Durch die zweite Identifikation und die Tatsache, dass diese auch den Ausführungsmeldungen, die von Hilfsbedienerprozess ausgehen, beigefügt wird, kann der dritte Knoten in vorteilhafter Weise Remote-Procedure-Calls, welche vom primären Bedienerprozess im Rahmen der Ausführung von vorangegangenen, übergeordneten Remote-Procedure-Calls erzeugt werden, als solche erkennen und letzteren eindeutig zuordnen.

Als verteiltes Rechnersystem wird vorzugsweise ein lokales Netzwerk verwendet, in welchem die Kommunikation auf der Basis von Broadcasting erfolgt. Unter Broadcasting soll verstanden werden, dass die von einem Knoten gesendeten Nachrichten, darunter die Remote-Procedure-Calls und die Ausführungsmeldungen, von allen Teilnehmern des Netzwerks, d.h. den einzelnen Knoten, etwa gleichzeitig empfangen werden können.

## Ansprüche

1. Verfahren zur Implementierung von Fehlertoleranz in einem verteilten Rechnersystem mit mehreren Knoten, gekennzeichnet durch folgende Merkmale:

-Ein durch einen Kundenprozess in einem ersten Knoten mit einer ersten Identifikation erzeugter erster Remote-Procedure-Call wird zu einem zweiten und einem dritten Knoten übertragen, in welchem er durch Bedienerprozesse ausgeführt werden kann, von denen der Bedienerprozess im zweiten Knoten der primäre und der Bedienerprozess im dritten Knoten der sekundäre ist;

-bis zum Erhalt einer, mit der genannten Identifikation versehenen Ausführungsmeldung durch einen der Bedienerprozesse, ist der Kundenprozess suspendiert;

-ausgeführt und nach erfolgreicher Ausführung mit einer solchen, zum ersten und dritten Knoten übertragenen Ausführungsmeldung abgeschlossen wird der erste Remote-Procedure-Call zunächst nur vom primären Bedienerprozess im zweiten Knoten, wobei ein zweiter, mit einer zweiten sowie zusätzlich der ersten Identifikation versehener, zweiter Remote-Procedure-Call erzeugt wird;

-der zweite Remote-Procedure-Call wird wieder zum dritten Knoten sowie zu einem weiteren vierten Knoten übertragen, in dem er durch einen Hilfsbedienerprozess ausgeführt und nach erfolgreicher Ausführung mit einer mit beiden Identifikationen versehenen, zum zweiten und zum dritten Knoten übertragenen Ausführungsmeldung abgeschlossen wird;

-bis zum Erhalt der Ausführungsmeldung durch den Hilfsbedienerprozess ist der primäre Bedienerprozess suspendiert;

-vom sekundären Bedienerprozess im dritten Knoten wird der erste Remote-Procedure-Call nur ausgeführt und nach erfolgreicher Ausführung mit einer mit der ersten Identifikation versehenen und zum ersten Knoten übertragenen Ausführungsmeldung abgeschlossen, wenn eine Ausführungsmeldung vom primären Bedienerprozess, z.B. auf Grund eines Fehlers, ausbleibt und zwar vollständig, einschliesslich der Erzeugung des zweiten Remote-Procedure-Calls, wenn auch keine Ausführungsmeldung vom Hilfsbedienerprozess vorliegt und, sofern eine solche bereits vorliegt, wird der erste Remote-Procedure-Call vom sekundären Bedienerprozess ohne erneute Erzeugung des zweiten Remote-Procedure-Calls ausgehend von dem durch die letztgenannte Ausführungsmeldung geschaffenen Zustand bearbeitet.

2. Verfahren nach Anspruch 1, dadurch gekennzeichnet, dass die zweite Identifikation diejenige des vorangegangenen, ersten Remote-Procedure-Calls ist.

3. Verfahren nach einem der Ansprüche 1 oder 2, dadurch gekennzeichnet, dass die Remote-Procedure-Calls jeweils Meldungen enthalten und dass die zweite Identifikation in den Meldungen angeordnet wird.

4. Verfahren nach einem der Ansprüche 1 bis 3, dadurch gekennzeichnet, das die Remote-Procedure-Calls im verteilten Rechnersystem mittels Broadcasting gesendet werden.

5. Verfahren nach einem der Ansprüche 1 bis 4, dadurch gekennzeichnet, dass das verteilte Rechnersystem ein lokales Netzwerk ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PROCEEDINGS IEEE INFOCOM 85, 26.-28. März 1985, Seiten 77-83, IEEE, New York, US; G.LEITNER: "Distributed synchronization of multiple servers" * Insgesamt * | 1,4,5 | G 06 F 15/16 |
| | --- | | |
| A | PROCEEDINGS COMPCON 82, New York, 20.-23. September 1982, Seiten 681-686, IEEE, New York, US; K.J.KING et al.: "An architecture for local area network servers" * Insgesamt * | 1 | |
| | --- | | |
| A | IEEE TRANSACTIONS ON SOFTWARE ENGINEERING, New York, Mai 1984, Band SE-10, nr. 3, Seiten 257-268, IEEE New York, US; LIBA SVOBODOVA: "Resilient distributed computing" * Insgesamt * | 1 | RECHERCHIERTE SACHGEBIETE (Int. Cl.4)  G 06 F |
| | --- | | |
| A,D | ACM TRANSACTIONS ON COMPUTER SYSTEMS, New York, Februari 1984, Band 2, nr. 1, Seiten 39-59, New York, US; A.D.BIRREL et al.: "Implementing remote procedure calls" * Insgesamt * | 1 | |
| | ---      -/- | | |

Der vorliegende Recherchenbericht wurde für alle Patentansprüche erstellt.

| Recherchenort | Abschlußdatum der Recherche | Prüfer |
|---|---|---|
| DEN HAAG | 21-01-1987 | WANZEELE R.J. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | PROCEEDINGS OF THE 4th SYMPOSIUM ON RELIABILITY IN DISTRIBUTED SOFTWARE AND DATABASE SYSTEMS, 1984, Seiten 11-24, V.GLIGOR, US; E.C.COOPER: "Circus: A replicated procedure call facility" <br> * Insgesamt * | 1 | |
| | ----- | | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 21-01-1987 | WANZEELE R.J. |